# FASCICULE DE BREVET EUROPEEN

(11) **EP 3 420 298 B1**
(45) Date de publication et mention de la délivrance du brevet: **07.12.2022**
(21) Numéro de dépôt: 17707274.1
(22) Date de dépôt: 24.02.2017
(51) Int. Cl.: F41F 3/08, F41F 3/052

(54) **STRUCTURE DE TUBE LANCE-ARME ET NOTAMMENT DE TUBE LANCE-TORPILLE**
WAFFENROHR UND INSBESONDERE TORPEDOROHRSTRUKTUR
WEAPON TUBE AND PARTICULARLY TORPEDO TUBE STRUCTURE

(30) Priorité: 25.02.2016 FR 1600320
(43) Date de publication de la demande: 02.01.2019
(73) Titulaire: NAVAL GROUP, 75015 Paris (FR)
(72) Inventeur: LAMOTTE, Arnaud, 16600 Ruelle sur Touvre (FR); RAFFOUX, Johan, 16600 Ruelle sur Touvre (FR); NIOT, Stéphane, 16600 Ruelle sur Touvre (FR)
(74) Mandataire: Lavoix
(86) Numéro de dépôt international: PCT/EP2017/054295
(87) Numéro de publication internationale: WO 2017/144646

(56) Documents cités:
- EP-A1- 2 107 331
- WO-A1-01/92095
- DE-B- 1 043 875
- US-A- 3 825 980

## Description

La présente invention concerne une structure de tube lance-arme et notamment de tube lance-torpille.

Des structures de ce type sont déjà bien connues dans l'état de la technique, et celles-ci peuvent comporter de façon classique, un système de maintien de l'arme en position de stockage dans le tube.

Des exemples de tels systèmes sont décrits dans les documents DE 10 43 875 B WO0192095, EP2107331 et US3825980.

De tels systèmes de maintien sont utilisés pour assurer le blocage de l'arme et notamment de la torpille dans le tube, afin d'éviter tout déplacement de celle-ci dans le tube lors des évolutions de l'engin porteur, tel que par exemple un sous-marin proprement dit ou encore un bâtiment de surface.

En règle générale également, un tel système de maintien comporte un mécanisme à pince (DE 10 43 875 B, WO0192095 et EP2107331) relié à la structure du tube et déplaçable par des moyens d'actionnement, entre des positions fermées de blocage d'une pièce d'interface de l'arme, afin de bloquer cette arme en position dans le tube, et ouverte de libération de cette pièce d'interface et donc de l'arme.

Les moyens d'actionnement comprennent par exemple des moyens se présentant sous la forme d'un levier actionnable par un opérateur ou encore d'un vérin par exemple pneumatique, permettant de déplacer le mécanisme à pince entre ses positions fermée et ouverte.

Cependant, il a été constaté des erreurs de manipulation par exemple de la part des opérateurs, erreurs se traduisant par un défaut de blocage en position de l'arme ou par un faux blocage de celle-ci.

On conçoit alors que ce défaut de blocage ou ce faux blocage de celle-ci, peut avoir des conséquences relativement graves tant pour l'arme, que pour les opérateurs et le porteur.

Le but de l'invention est donc de résoudre ces problèmes.

A cet effet, l'invention a pour objet une structure de tube lance-arme et notamment de tube lance-torpille, comportant un système de maintien de l'arme en position de stockage dans le tube, comportant un mécanisme à pince relié à la structure et déplaçable par des moyens d'actionnement entre des positions fermée de blocage d'une pièce d'interface de l'arme afin de bloquer celle-ci en position dans la structure et ouverte de libération de cette pièce d'interface et donc de l'arme, ladite structure comportant des moyens élastiques de sollicitation du mécanisme à pince en position fermée, le mécanisme à pince comportant un cylindre de fermeture de la pince, les moyens élastiques étant associés à ce cylindre pour le pousser en position de fermeture du mécanisme, la structure étant caractérisée en ce que les moyens élastiques comprennent un ressort hélicoïdal placé à l'arrière du cylindre pour pousser celui-ci.

La structure selon l'invention peut comprendre l'une ou plusieurs des caractéristiques suivantes, prise(s) isolément ou suivant toute combinaison techniquement possible :
- les moyens d'actionnement comprennent un levier de déverrouillage manipulable par un opérateur ;
- le cylindre de fermeture est associé à une chambre de recul et est raccordé à la chasse du tube pour assurer l'ouverture du mécanisme à pince lors du tir de l'arme ;
- la pièce d'interface de l'arme comporte un organe fixé sur celle-ci et munie d'une portion de forme sphérique adaptée pour coopérer avec le mécanisme à pince pour bloquer l'arme.

L'invention sera mieux comprise à la lecture de la description qui va suivre, donnée uniquement à titre d'exemple et faite en se référant aux dessins annexés, sur lesquels :
- la figure 1 représente un schéma synoptique illustrant l'implantation d'une arme dans une structure de tube selon l'invention et de moyens de maintien de l'arme en position,
- la figure 2 représente un mécanisme à pince entrant dans la constitution d'une structure selon l'invention, et
- la figure 3 représente une vue en coupe détaillée d'un exemple de réalisation de ces moyens à pince.

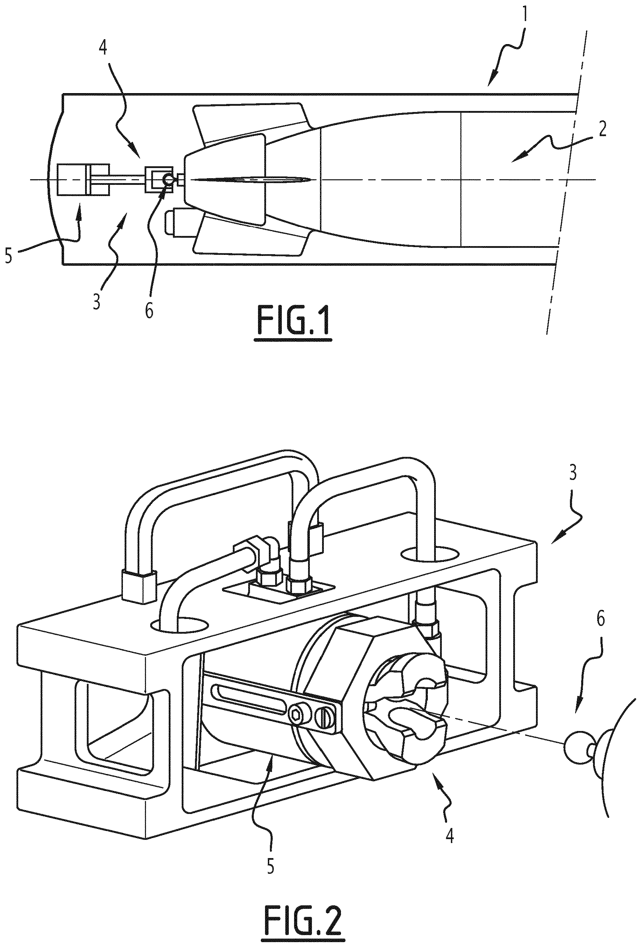

On a en effet illustré sur ces figures et en particulier sur la figure 1, une structure de tube lance-arme et notamment de tube lance-torpille.

Sur la figure 1, le tube est désigné par la référence générale 1, et l'arme, telle que la torpille, par la référence générale 2.

Il est prévu dans le tube 1, un système de maintien de l'arme 2 en position de stockage dans le tube 1.

Ce système de maintien de l'arme est désigné par la référence générale 3 sur ces figures.

Ce système comporte un mécanisme à pince désigné par la référence générale 4 et relié de façon classique au reste du tube 1.

Ce système de maintien est déplaçable par des moyens d'actionnement, désignés par la référence générale 5, entre des positions fermée, de blocage d'une pièce d'interface de l'arme 2 afin de bloquer celle-ci en position dans la structure de tube, et ouverte, de libération de cette pièce d'interface et donc de l'arme 2.

De façon générale, la pièce d'interface de l'arme comporte un organe fixé sur celle-ci et est munie d'une portion de forme sphérique adaptée pour coopérer avec le mécanisme à pince 4, pour bloquer l'arme 2.

Cette pièce d'interface est désignée par la référence générale 6 sur les figures 1 et 2, et est donc reliée à l'extrémité arrière de l'arme 2, telle qu'une torpille.

Sur la figure 2, on a illustré un exemple de réalisation de ce système de maintien 3 de l'arme en position.

On reconnaît en effet sur cette figure 2, le système de maintien désigné par la référence générale 3, le mécanisme à pince désigné par la référence générale 4 et les moyens d'actionnement de ce mécanisme à pince 4, désignés par la référence générale 5.

On reconnaît également sur cette figure 2, la pièce d'interface 6 de l'arme 2, munie d'une portion de forme sphérique, adaptée pour coopérer avec le mécanisme à pince 4, pour bloquer l'arme 2 dans le tube.

Sur la figure 1, le mécanisme à pince 4 est illustré en position fermée autour de la pièce d'interface 6, pour bloquer l'arme 2 dans le tube, tandis que sur la figure 2, ce mécanisme à pince 4 est illustré en position ouverte, de libération de la pièce d'interface 6 et donc de l'arme 2.

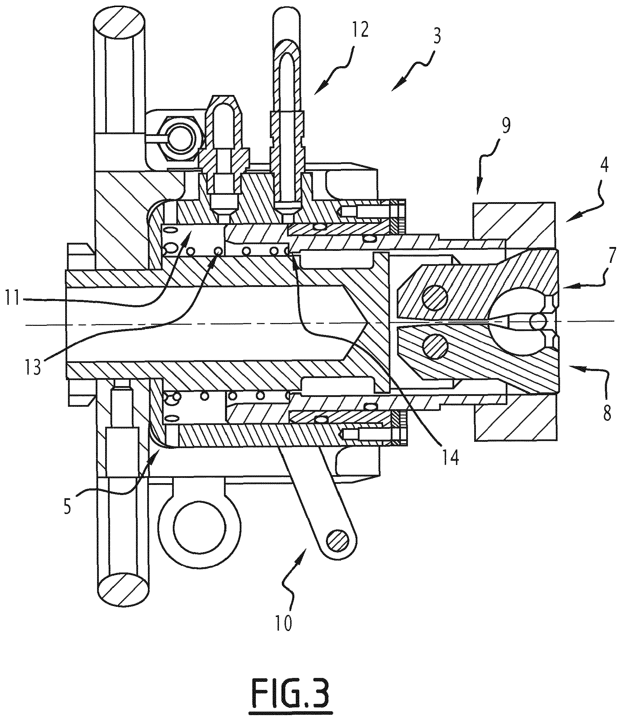

On a illustré de façon plus détaillée sur la figure 3, un exemple de réalisation d'un tel système de maintien 3.

Sur cette figure 3, le système de maintien est toujours désigné par la référence générale 3, le mécanisme à pince par la référence générale 4 et les moyens d'actionnement de celui-ci par la référence générale 5.

En fait et comme cela est illustré, le mécanisme à pince 4 comporte par exemple, deux mâchoires de pince articulées et désignées par les références générales 7 et 8 sur cette figure 3, associées à un cylindre coulissant de fermeture de cette pince, désigné par la référence générale 9 sur cette figure.

Ce cylindre de fermeture 9 est en effet monté déplaçable à coulissement dans le reste du système de maintien 3, pour permettre de fermer ou d'ouvrir la pince, c'est-à-dire de bloquer ou de libérer la pièce d'interface 6 et donc l'arme 2.

Un levier de manœuvre, désigné par la référence générale 10 sur cette figure, actionnable par un opérateur, est également prévu pour assurer la manœuvre de ce mécanisme.

Le cylindre de fermeture 9 du mécanisme à pince 4 est également associé à une chambre de recul, désignée par la référence générale 11 sur cette figure 3, et est raccordé par exemple au circuit de chasse du tube 1, pour assurer l'ouverture du mécanisme à pince 4, lors du tir ou du lancement de l'arme 2.

En effet, lors du déclenchement de la chasse, c'est-à-dire du tir de l'arme, de l'air sous pression est injecté dans le système de maintien 3, pour faire reculer le cylindre 9 et donc déplacer celui-ci vers sa position d'ouverture du mécanisme à pince 4, afin de libérer l'arme 2, en vue de son tir.

Ceci est rendu possible par l'intermédiaire de moyens de raccordement 12 de ce système de maintien, au circuit de chasse.

L'injection d'air sous pression du circuit de chasse dans ce système, permet en effet de faire reculer ce cylindre coulissant 9 et donc d'ouvrir le mécanisme à pince 4 afin de libérer l'arme 2.

Selon l'invention et pour résoudre les différents problèmes évoqués précédemment, concernant un défaut de blocage en position de l'arme 2 par une fausse ou un défaut de manœuvre du mécanisme à pince 4, dans la structure selon l'invention, il est prévu des moyens élastiques de sollicitation du mécanisme à pince 4 en position fermée.

Selon l'invention et comme illustré sur la figure 3, ces moyens élastiques de sollicitation comprennent un ressort hélicoïdal placé à l'arrière du cylindre 9 pour pousser celui-ci vers sa position de fermeture du mécanisme à pince 4.

Ce ressort hélicoïdal est désigné par la référence générale 13 sur cette figure 3.

Ce ressort 13 est placé dans la chambre de recul 11 du cylindre 9 de fermeture du mécanisme à pince, pour pousser ce cylindre 9 vers l'avant, en étant en appui par exemple sur une collerette de butée 14 de celui-ci, afin d'amener ce cylindre 9 en position de fermeture du mécanisme à pince 4.

Bien entendu des moyens élastiques autres qu'un tel ressort hélicoïdal peuvent être envisagés, mais selon l'invention, les moyens élastiques comprennent un ressort hélicoïdal.

On conçoit alors que ces moyens élastiques permettent d'appliquer une sollicitation en permanence sur le mécanisme à pince pour le fermer.

La mise en position de déblocage de l'arme 2 nécessite alors une action positive sur le levier 10 et/ou la fermeture du circuit de chasse pour injecter de l'air sous pression dans le système, pour ouvrir la pince et donc libérer l'arme.

Dès le relâchement du levier 10 par l'opérateur ou le relâchement de la pression du circuit de chasse, le ressort 13 pousse le cylindre 9 de fermeture de la pince, en position active de fermeture.

Il n'est donc plus possible que la pince reste en position ouverte, comme c'était le cas dans l'état de la technique.

Bien entendu d'autres modes de réalisation encore peuvent être envisagés.

## Revendications

1. Structure de tube lance-arme et notamment de tube lance-torpille, comportant un système (3) de maintien de l'arme (2) en position de stockage dans le tube (1), comportant un mécanisme à pince (4) relié à la structure et déplaçable par des moyens d'actionnement (5) entre des positions fermée de blocage d'une pièce d'interface (6) de l'arme afin de bloquer celle-ci en position dans la structure et ouverte de libération de cette pièce d'interface (6) et donc de l'arme (2), ladite structure comportant des moyens élastiques (13) de sollicitation du mécanisme à pince (4) en position fermée, le mécanisme à pince (4) comportant un cylindre (9) de fermeture de la pince, les moyens élastiques (13) étant associés à ce cylindre (9) pour le pousser en position de fermeture du mécanisme,
la structure étant **caractérisée en ce que** les moyens élastiques comprennent un ressort hélicoïdal (13) placé à l'arrière du cylindre (9) pour pousser celui-ci.

2. Structure selon la revendication 1, **caractérisée en ce que** les moyens d'actionnement comprennent un levier de déverrouillage (10) manipulable par un opérateur.

3. Structure selon la revendication 1, **caractérisée en ce que** le cylindre de fermeture (9) est associé à une chambre de recul (11) et est raccordé (en 12) à la chasse du tube pour assurer l'ouverture du mécanisme à pince (4) lors du tir de l'arme.

4. Structure selon l'une quelconque des revendications précédentes, **caractérisée en ce que** la pièce d'interface (6) de l'arme (2) comporte un organe fixé sur celle-ci et munie d'une portion de forme sphérique adaptée pour coopérer avec le mécanisme à pince (4) pour bloquer l'arme.

## Patentansprüche

1. Struktur eines Waffenwerferrohrs und insbesondere Torpedowerferrohrs, umfassend ein System (3) zum Halten der Waffe (2) in einer Lagerposition in dem Rohr (1), umfassend einen Klemmmechanismus (4), der mit der Struktur verbunden ist und durch Betätigungseinrichtungen (5) zwischen einer geschlossenen Arretierposition eines Schnittstellenteils (6) der Waffe, um diese in der Position in der Struktur zu arretieren, und einer offenen Freigabeposition dieses Schnittstellenteils (6) und damit der Waffe (2) verschiebbar ist, die Struktur umfassend elastische Einrichtungen (13) zum Belasten des Klemmmechanismus (4) in der geschlossenen Position, der Klemmmechanismus (4) umfassend einen Zylinder (9) zum Schließen der Klemme, wobei die elastischen Einrichtungen (13) mit diesem Zylinder (9) assoziiert sind, um ihn in die Schließposition des Mechanismus zu drücken,
wobei die Struktur **dadurch gekennzeichnet ist, dass** die elastischen Einrichtungen eine Schraubenfeder (13) umfassen, die an der Rückseite des Zylinders (9) platziert ist, um diesen zu drücken.

2. Struktur nach Anspruch 1, **dadurch gekennzeichnet, dass** die Betätigungseinrichtungen einen Entriegelungshebel (10) umfassen, der von einem Bediener gehandhabt werden kann.

3. Struktur nach Anspruch 1, **dadurch gekennzeichnet, dass** der Schließzylinder (9) mit einer Rückschlagkammer (11) assoziiert ist und (bei 12) mit dem Lauf des Rohres verbunden ist, um das Öffnen des Klemmmechanismus (4) beim Abfeuern der Waffe sicherzustellen.

4. Struktur nach einem der vorherigen Ansprüche, **dadurch gekennzeichnet, dass** das Schnittstellenteil (6) der Waffe (2) ein Element umfasst, das daran befestigt und mit einem kugelförmigen Abschnitt versehen ist, der angepasst ist, um mit dem Klemmmechanismus (4) zusammenzuwirken, um die Waffe zu arretieren.

## Claims

1. A weapon tube, and particularly a torpedo tube structure, including a weapon (2) holding system (3) in the storage position in the tube (1), including a clamping mechanism (4) connected to the structure and movable by actuating means (5), between a closed position for blocking an interface part (6) of the weapon in order to block the latter in position, and an open position for releasing this interface part (6) and therefore the weapon (2), said structure comprising elastic means (13) for stressing the clamping mechanism (4) in the closed position,
the clamping mechanism (4) including a closing cylinder (9) of the clamp, the elastic means (13) being associated with this cylinder (9) to push it into the closed position of the mechanism.
the structure being **characterized in that** the elastic means comprise a helical spring (13) placed behind the cylinder (9) to push the latter.

2. The structure according to claim 1, **characterized in that** the actuating means comprise an unlocking lever (10) that can be manipulated by an operator.

3. The structure according to claim 1, **characterized in that** the closing cylinder (9) is associated with a withdrawal chamber (11) and is connected (at 12) to the expulsion of the tube to guarantee the opening of the clamping mechanism (4) during firing of the weapon.

4. The structure according to any one of the preceding claims, **characterized in that** the interface part (6) of the weapon (2) includes a member fastened thereon and provided with a spherical portion suitable for cooperating with the clamping mechanism (4) to block the weapon.
